Europäisches Patentamt

European Patent Office

Office européen des brevets

(11) Publication number: **0 136 595**
**A2**

## (12) EUROPEAN PATENT APPLICATION

(21) Application number: **84110685.9**

(22) Date of filing: **07.09.84**

(51) Int. Cl.⁴: **B 60 K 17/10**
**B 60 K 17/356**

(30) Priority: **30.09.83 US 538044**

(43) Date of publication of application:
**10.04.85 Bulletin 85/15**

(84) Designated Contracting States:
**DE IT**

(71) Applicant: **Rockwell International Corporation**
**600 Grant Street**
**Pittsburgh Pennsylvania 15219(US)**

(72) Inventor: **Cumming, James Charles**
**25 Woodside Park**
**Pleasant Ridge Michigan 48069(US)**

(72) Inventor: **Ries, Donald Lloyd**
**24059 Hanover**
**Dearborn Heights Michigan 48125(US)**

(74) Representative: **Schwepfinger, Karl-Heinz,**
**Dipl.-Ing. et al,**
**Prinz, Leiser, Bunke & Partner Ernsbergerstrasse 19**
**D-8000 München 60(DE)**

(54) Hydraulic drive system for a vehicle.

(57) A hydraulic drive system for a vehicle includes a hydraulic pump capable of utilizing hydraulic fluid from a reservoir. The outlet of the pump includes a pressure control valve for establishing a predetermined pressure for the hydraulic fluid being supplied to a common supply manifold for a pair of positive displacement hydraulic motors. Each of the motors has an output shaft operably coupled to a wheel of the vehicle. A common discharge manifold for the motors allows hydraulic fluid to be returned to the reservoir. Each motor has an output shaft speed proportional to the flow rate of the hydraulic fluid therethrough and the flow rate is limited to a predetermined maximum level at the predetermined pressure due to internal resistance of the hydraulic fluid flowing through the motor. The hydraulic pump is capable of supplying hydraulic fluid at the predetermined pressure at a supply rate substantially greater than the predetermined maximum level of the flow rate for one of the motors.

FIG. I

- 1 -

## HYDRAULIC DRIVE SYSTEM FOR A VEHICLE
### Background of the Invention

Field of Invention. This invention relates to a hydraulic drive system for a vehicle and, more specifically, to such a drive system which is capable of providing torque to one wheel if the other wheel is in a low torque, slipping condition.

Description of the Prior Art. With the recent popularity of front wheel drive vehicles, there has been a decrease in the number of vehicles which offer four wheel drive capabilities. Since the engines are located in the front and configured to provide power to the front wheels, such vehicles do not usually include rearwardly extending power transmitting elements for providing power to the rear wheel configuration.

However, in some driving situations it would be advantageous to be able to selectively provide power and torque to the rear wheels. For example, if a vehicle is at rest or at slow speeds and the front, drive wheels are incapable of providing sufficient traction for proper movement of the vehicle, it would be desirable to be able to provide additional power at the rear wheels where improved traction would assure proper movement of the vehicle.

Additionally, for an entirely different reason and purpose, there remains a need for providing slow speed, reliable propulsion for various agricultural tractors. Although such tractors may include a powerful internal combustion engine, the engine often serves as the primary source of power to operate the associated agricultural equipment thereon and another, independenty controlled means of propulsion would be attractive.

Consequently, for these and other applications, there remains a need for a reliable, relatively inexpensive propulsion system which is capable of operating at low speeds with a relatively high torque.

## Summary of the Invention

It is, therefore, an object of this invention to provide a drive system for a vehicle which utilizes a hydraulic pump and a pair of positive displacement, hydraulic motors having output shafts operably coupled to a pair of wheels of the vehicle.

These and other objects of the invention are provided in a preferred embodiment thereof including a hydraulic drive system for a vehicle having a hydraulic pump mounted on the vehicle and including outlet piping therefrom. A reservoir contains hydraulic fluid to be delivered by inlet piping to the pump. Pressure control means is included in the outlet piping to limit the hydraulic fluid from the pump to a predetermined pressure and is capable of discharging excess hydraulic fluid to the reservoir. A pair of positive displacement, hydraulic motors each include an output shaft operably coupled to a wheel of the vehicle. A common supply means and a common discharge means for the motors are respectively connected to the outlet piping from the pump and return piping to the reservoir. Each of the motors has an output shaft speed proportional to a flow rate of the hydraulic fluid therethrough. The flow rate is limited to a predetermined maximum level at the predetermined pressure of the hydraulic fluid due to internal resistance of the hydraulic fluid flowing through the motor. The hydraulic pump is capable of supplying the hydraulic fluid at the predetermined pressure at a supply rate substantially greater than the predetermined maximum level of the flow rate for one of the motors.

## Brief Description of the Drawings

Figure 1 is a schematic view of the preferred hydraulic drive system for a vehicle.

Figure 2 is a fragmentary, elevational view of the preferred hydraulic motors employed in the hydraulic drive system as shown in Figure 1.

Figures 3a through 3e are views as seen generally along line 3-3 in Figure 2 to demonstrate the internal operations of one of the preferred motors.

Figure 4 is a motor characteristic curve showing the relationship of hydraulic flow rate to speed for a preferred hydraulic motor.

Figure 5 is a motor characteristic curve for the motor as shown in Figure 4 showing the relationship between hydraulic flow rate and maximum torque output.

## Detailed Description of the Preferred Embodiment

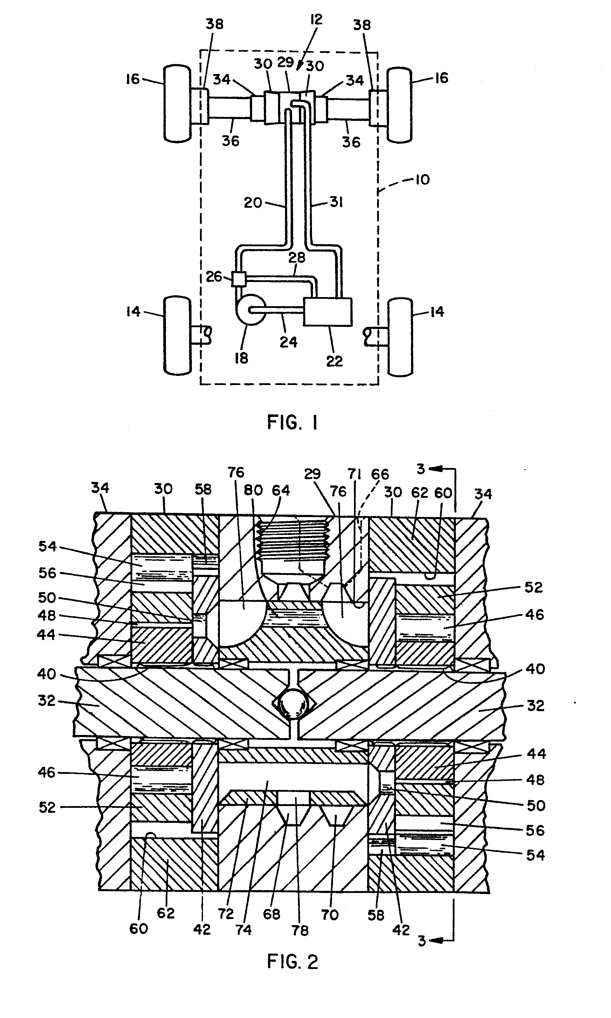

As seen in Figure 1 in a schematic view, a typical vehicle 10 includes a preferred hydraulic drive system 12. For primary propulsion, the vehicle 10 employs a pair of front wheels 14 which are driven by a conventional internal combustion engine (not shown). However, the preferred hydraulic drive system 12 is capable of providing low speed, high torque propulsion to a pair of rear wheels 16 during those conditions in which there is not sufficient torque or traction for safe operation by the front wheels 14 alone. As a result, it is expected that the preferred hydraulic drive system 12 will be selectively energized and de-energized by the driver of the vehicle on those occasions when such additional traction is considered necessary or desirable.

Specifically, the preferred hydraulic drive system 12 includes a hydraulic pump 18 which is mounted on the vehicle 10 and includes outlet piping 20 therefrom. A reservoir 22 contains operating hydraulic fluid for the pump 18 which is delivered thereto by inlet piping 24. The pump 18 may be a positive displacement pump or any other type of pump which is capable of providing a sufficient quantity of hydraulic fluid at a predetermined pressure. The specific quantity and pressure will be discussed in detail hereinbelow. Power for the pump 16 could be provided by an electric motor which is energized by the electrical system of the vehicle 10 or some other type of drive means associated with the main propulsion for the vehicle 10. To insure continued operation of the pump 18 at the desired predetermined pressure, a pressure control valve 26 is provided in the outlet piping 20 and is capable of discharging excess hydraulic fluid to the reservoir 22 by return piping 28.

To convert the output of the pump 18 to a means for producing rotation of the wheels 16, a pair of positive displacement, hydraulic motors 30 is employed. Hydraulic fluid is preferably supplied by outlet piping 20 to a common supply and discharge housing 29 for the motors 30 and is returned to the reservoir 22 by return piping 31. Each of the motors 30 includes an output shaft 32 (Figure 2) which is operably connected to a wheel 16 of the vehicle 10. As seen in Figure 1, the output shafts 32 are not directly coupled to the wheels 16. Since the preferred hydraulic system 12 is being used for such a front wheel drive vehicle, additional components are employed for a preferred overall operation which would not be possible if the shafts 32 were directly coupled to the wheels 16.

Although the preferred hydraulic drive system 12 is intended to be operated at low speeds as an assist to the primary propulsion for the vehicle 10, there is some concern that the hydraulic drive system 12 may be improperly utilized during normal operation of the vehicle 10 at higher speeds. Clearly, any direct coupling of the shafts 32 to the wheels 16 at the higher speeds could damage the motors 30. Accordingly, the output shafts 32 for the motors 30 are initially coupled to one-way clutch elements 34. As a result, the motors 30 are capable of transmitting torque to the wheels 16 in a forward direction, but, if the forward wheels 14 are propelling the vehicle 10 at too fast a speed for the motors 30, the wheels 16 will be able to freely rotate without direct coupling to the motors 30.

It will also be seen in Figure 1 that an axle shaft (not shown) extending from each of the one-way clutch elements 34 outwardly toward the wheel 16 is enclosed within an axle housing portion 36 and terminates at a planetary reduction gear 38. Consequently, depending on the desired speed and torque to be produced at each wheel 16, a reduction gear 38 can be employed rather than direct drive for each wheel from the one-way clutch element 34. Clearly, the specific amount of reduction or whether a direct coupling is alternatively employed depends upon the operating parameters for the particular vehicle 10. In fact, if the preferred hydraulic drive system were to be used as the main propulsion for an agricultural tractor as mentioned hereinabove, neither the one-way clutch element nor the reduction gear would be necessary.

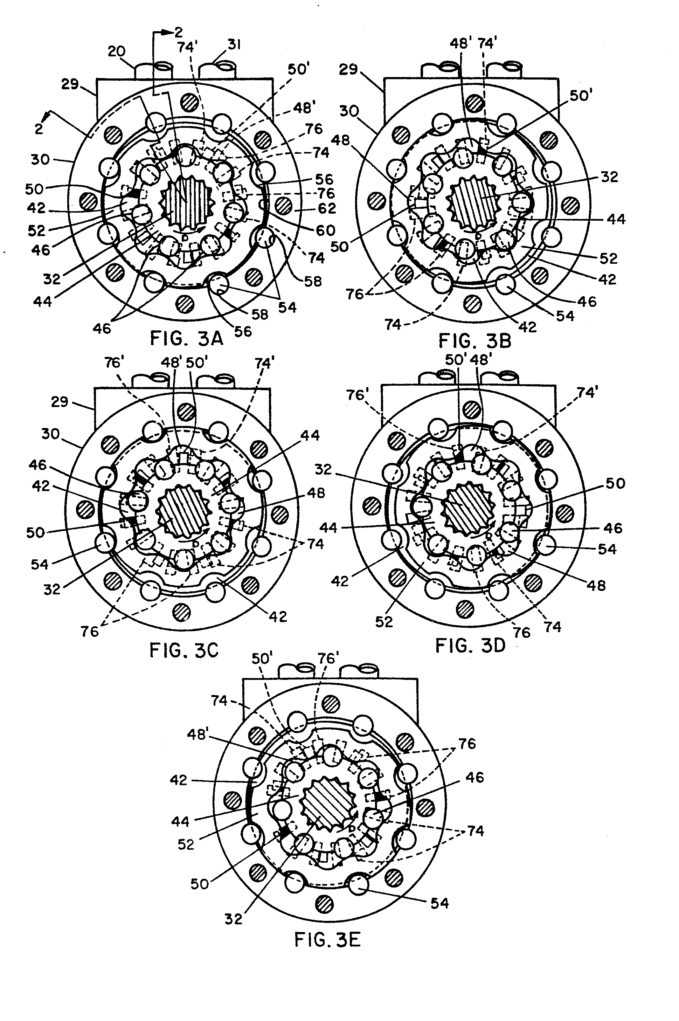

As seen in Figures 2 and 3a through 3e, the preferred motor 30 employs an internally generated rotor and is of the type sold by the Fluid Machinery Division of the W. H. Nichols Co. of Gray, Maine. However, such motors have not heretofore been operated in pairs in the manner described hereinbelow and have therefore employed a single housing portion for the inlet and outlet manifold for each motor rather than a common supply and discharge housing 29 which provides hydraulic fluid for both motors 30.

Each motor 30 includes the shaft 32 with a splined region 40 thereon. A chamber valve disc 42 and an inner rotor 44 are received on the splined region 40 for rotation with the shaft 32. The inner rotor 44 carries a plurality of evenly spaced, sealing rollers 46, there being seven such sealing rollers 46 in the preferred motor 30. It will be seen that the sealing rollers 46, therefore, will define the circumferential boundaries of seven operating chambers 48. To allow entrance of and discharge of hydraulic fluid at each of the operating chambers 48, the chamber valve disc 42 includes seven chamber ports 50 which are respectively centrally aligned between the sealing rollers 46 for each chamber 48.

To provide expanding and contracting displacement of the operating chambers 48, the inner rotor 44 and sealing rollers 46 are surrounded by an outer rotor 52. The outer rotor 52 has an interior surface with a plurality of curved teeth and valleys, one more than there are chambers 48. Therefore, in the preferred motor 30, there are eight such teeth and eight such valleys. As a result, the outer rotor 52 is allowed to orbit about the inner rotor 44 but is constrained from rotation by anti-rotation rollers 54 which operate in conjunction with an array of scallops 56 in the outer surface of the outer rotor 52 and grooves 58 in the interior surface 60 of the housing 62 of the motor 30.

To supply hydraulic fluid to and discharge hydraulic fluid from each of the motors 30, the outlet piping 20 is coupled to a supply fitting 64 and the return piping 31 is coupled to a discharge fitting 66 of the common supply and discharge housing 29. The supply fitting 64 intersects a circumferential groove 68 and the discharge fitting 66 intersects a circumferential groove 70 in an interior surface 71 of the common supply and discharge housing 29. A channeling element 72 fixedly mounted within the interior of the common supply and discharge housing 29 includes an alternating array of supply ports 74 and discharge ports 76. Specifically, the supply ports 74 extend axially across the channeling element 72 to be capable at opposite sides of the common supply and discharge housing 29 of alignment with the chamber ports 50 as they rotate thereby. Similarly, the discharge ports 56 are located on opposite sides of the channeling element 72 for alignment with the chamber ports 50 as they rotate thereby. To provide hydraulic fluid to each of the supply ports 74, an intersecting passage 78 for each supply port 74 is aligned with the circumferential groove 68. Similarly, the circumferential groove 70 is aligned with one of each corresponding pairs of discharge ports 76 and a connecting passage 80 allows hydraulic fluid to be transmitted thereto from the other of the pair of discharge ports 76.

As thus described, the channeling element 72 is capable of providing pressurized hydraulic fluid at each supply port 74 and capable of allowing discharge of hydraulic fluid through each discharge port 76 therebetween for the operation of each motor 30. The specific relationships of the supply ports 74 and discharge ports 76 with the chamber ports 50 rotating thereby can be seen by analyzing the specific operation of one chamber 48' in Figures 3a through 3e, where the output shaft 32 rotates in a counter-clockwise direction as indicated by the arrow D. As seen in Figure 3a, the operating chamber 48' is at a minimum displacement condition with its chamber port 50' located between a discharge port 76 and an adjacent supply port 74'. In Figure 3b, the inner rotor 44 has rotated to cause the chamber port 50' to be aligned with the supply port 74' and the chamber 48' has been expanded as the hydraulic fluid is supplied thereto. Chamber 48' is at its maximum displacement and fully expanded in Figure 3c as the chamber port 50' is no longer aligned with the supply port 74' but is not yet aligned with the next discharge port 76'. With the chamber port 50' of the chamber 48' aligned with the discharge port 76', the displacement of the chamber 48' is reduced as the hydraulic fluid therein is being discharged as seen in Figure 3d. Finally, in Figure 3e, the chamber port 50' is aligned between the discharge port 76' and the next supply port 74 with the minimum displacement condition in the chamber 48' as it is in a position to begin another operating cycle.

It can now be seen that each of the preferred motors 30 includes seven operating chambers 48 which operate in conjunction with eight pairs of supply ports 74 and discharge ports 76 to provide fifty-six power cycles for each rotation of the shaft 32. Accordingly, the motors 30 provide smooth, reliable torque for propulsion of the wheels 16 throughout use of the preferred hydraulic drive system 12.

However, there are other features of the preferred hydraulic system 12 which are significant. It has been found, with such a configuration as described hereinabove, that the preferred hydraulic system 12 tends to operate as a differential wherein the motors 30 are capable of operating independently of one another at different speeds. This capability is desirable when the vehicle 10 moves around a curve or over a surface having different traction conditions. On the other hand, the preferred hydraulic drive system 12 can be seen to include an additional feature which is not found in a normal differential. In a normal differential, if one wheel is in a slipping, spinning condition, power will not be supplied to the other wheel which is under traction and the vehicle will be incapable of movement. However, there are some modified differentials which are designed to insure that a wheel operating under a slipping condition will not prevent torque from being applied to the other wheel. In the preferred hydraulic drive system 12, the motors 30 operate in such a manner and the pump 18 includes a sufficient capacity to insure that power will be provided to either or both wheels 16 even if one of the wheels 16 is in a slipping, non-traction condition.

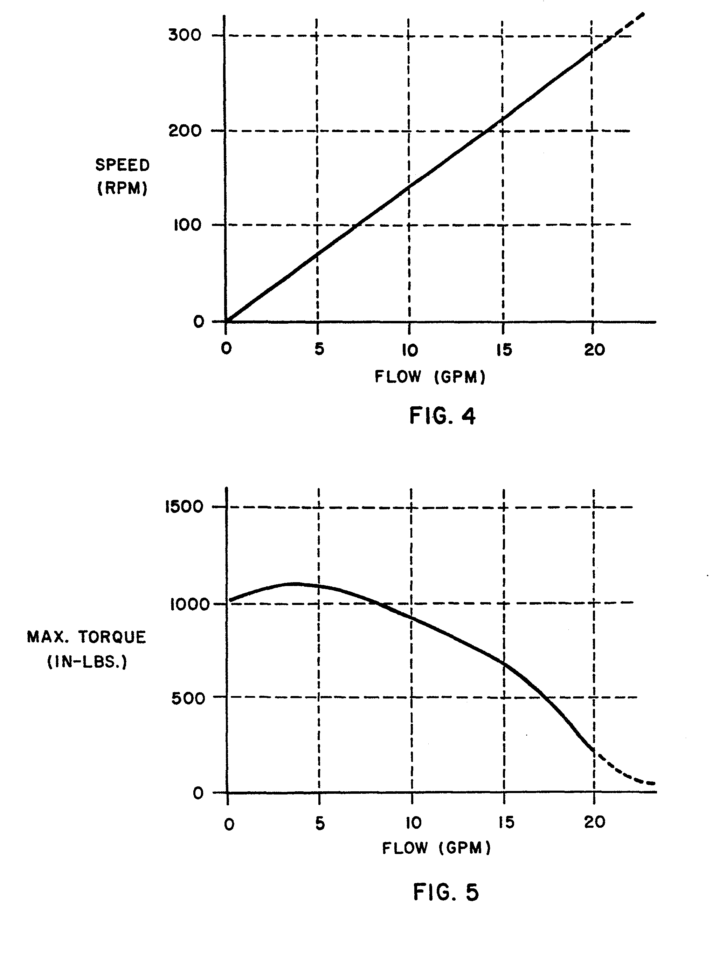

As seen in Figures 4 and 5, each of the motors 30 includes specific characteristics to obtain this objective. Specifically, the motors 30 are of the type which will produce an output shaft speed which is proportional to the flow rate of hydraulic fluid flowing therethrough. For example, as seen in Figure 4, a preferred motor 30 has a displacement of 16.4 cubic inches per revolution and is intended to be operated at a predetermined pressure of 500 pounds per square inch. For such a motor, the flow rate in gallons per minute is directly proportional to the speed in revolutions per minute as shown in Figure 4. Additionally, as seen in Figure 5, such a motor will operate at a maximum torque in inch-pounds as shown in the graph therein as the flow rate varies from zero to just over twenty gallons per minute. From the motor characteristic curves of Figures 4 and 5, it can be seen that if the wheel associated with one of the motors 30 is in a non-traction, slipping condition, the shaft speed will approach 300 revolutions per minute and the torque output will be reduced toward zero as the flow therethrough exceeds twenty gallons per minute. In other words, the flow rate through one of the motors 30 is limited to a predetermined maximum level at the predetermined pressure of 500 pounds per square inch of the hydraulic fluid due to internal resistance of the hydraulic fluid flowing through the motor 30. When there is no traction at one of the wheels 16, the torque will approach zero and the speed will reach a maximum level but the flow of hydraulic fluid therethrough will not significantly exceed twenty gallons per minute.

As a result, in order to insure that there is a power to the other motor 30 if one wheel 16 is in a slipping condition, the hydraulic pump 18 is designed to operate at the predetermined pressure of 500 pounds per square inch and is capable of supplying hydraulic fluid at that pressure at a supply rate substantially greater than twenty gallons per minute to insure that hydraulic fluid will continue to be provided to the other motors 30. For example, the preferred hydraulic pump 18 would be capable of providing hydraulic fluid at a rate of thirty to forty gallons per minute at 500 pounds per square inch during normal operation so that there would be at least ten to twenty gallons per minute being provided to one of the motors 30 if the other motor 30 were under a slipping condition and required about twenty gallons per minute flow of hydraulic fluid even if no torque was being generated thereby.

Clearly, the use of a common supply and discharge housing 29 tends to insure the most efficient supply of hydraulic fluid to either or both of the motors 30 and to insure that some propulsion is being provided to the vehicle 10 even if traction is not possible at one of the wheels 16. It should also be clear that various alternatives to the preferred hydraulic drive system could be provided without departing from the invention as claimed.

- 10 -

I CLAIM:

1. A hydraulic drive system for a vehicle comprising:

a hydraulic pump mounted on said vehicle and including outlet piping therefrom;

a reservoir containing hydraulic fluid to be delivered by inlet piping to said pump;

pressure control means in said outlet piping to limit said hydraulic fluid from said pump to a predetermined pressure, said pressure control means discharging excess said hydraulic fluid to said reservoir;

a pair of positive displacement, hydraulic motors, each said motor having an output shaft operably coupled to a wheel of said vehicle;

a common supply means and a common discharge means for said motors, said supply means being connected to said outlet piping and said discharge means being connected by return piping to said reservoir;

each said motor having an output shaft speed proportional to a flow rate of said hydraulic fluid therethrough, said flow rate being limited to a predetermined maximum level at said predetermined pressure of said hydraulic fluid due to internal resistance of said hydraulic fluid flowing through said motor; and

said hydraulic pump being capable of supplying said hydraulic fluid at said predetermined pressure at a supply rate substantially greater than said predetermined maximum level of said flow rate for one of said motors.

2. The hydraulic drive system as set forth in Claim 1, wherein each of said motors is an internally generated rotor type having operating chambers and chamber ports therefor which rotate with said output shaft.

3. The hydraulic drive system as set forth in Claim 2, wherein said common supply means and said common discharge means includes a housing mounted between said motors including an array of supply ports and an array of discharge ports for each said motor.

4. The hydraulic drive system as set forth in Claim 3, wherein said supply ports and said discharge ports for each said motor are alternatively aligned with each said chamber port rotating thereby.

5. The hydraulic drive system as set forth in Claim 4, wherein each said supply port of said array of said supply ports for one of said motors is connected to a corresponding said supply port of said array of said supply ports for the other of said motors and each of said discharge ports of said array of said discharge ports for said one motor is connected to a corresponding said discharge port of said array of said discharge ports for said other motor.

6. The hydraulic drive system as set forth in Claim 5, wherein said array of said supply ports are interconnected by a first circumferential chamber in said housing which said first circumferential chamber is connected to said outlet piping and said array of said discharge ports are interconnected by a second circumferential chamber within said housing which said second circumferential chamber is connected to said return piping.

FIG. 1

FIG. 2

FIG. 3A

FIG. 3B

FIG. 3C

FIG. 3D

FIG. 3E

FIG. 4

FIG. 5